# EUROPEAN PATENT APPLICATION

(11) **EP 1 975 482 A1**
(43) Date of publication of application: **01.10.2008**
(21) Application number: 08152905.9
(22) Date of filing: 18.03.2008
(51) Int. Cl.: F16K 15/14

(54) **Check valve for a compressor**

(30) Priority: 30.03.2007 JP 2007091406
(71) Applicant: ANEST IWATA CORPORATION, Yokohama-shi, Kanagawa 223-8501 (JP)
(72) Inventor: Inoue, Hiroshi, Yokohama Kanagawa 223-8501 (JP)
(74) Representative: Götz, Georg Alois

(57) **Abstract**

A compressed gas is introduced from a compressor into a inlet of a check valve. In a cylindrical casing of the check valve, a valve seat is provided and has a plurality of paths through which compressed gas flows from the inlet to an outlet of the check valve. The paths are opened and closed by a valve disc. A deformation limiting member is provided on the valve disc to limit a gap between the valve disc and the valve seat.

## Description

The present invention relates to a check valve for a compressor and in particular to an oilless check valve.

JP6-83975U discloses a check valve for a compressor, comprising a cylindrical casing having an inlet connected to an outlet of the compressor and an outlet for discharging compressed air introduced from the inlet; a ball valve for opening a path from the inlet by moving away from a tapered seat surface in the cylindrical casing when compressed air flows from the inlet to the outlet and closing the path by contacting the tapered surface when the inlet is lower in pressure than the outlet; and a valve seat for limiting an opening between the ball valve and the tapered seat surface.

However, in the check valve in the Japanese publication, the ball valve is provided in the cylindrical casing freely, and when compressed air flows from the inlet to the outlet during operation of the compressor, the ball valve is vibrated owing to pulsation of air and hit against the valve seat or its peripheries thereby producing chattering sound.
The ball valve is simple, but rolls owing to its own weight if the cylindrical casing is inclined with respect to a vertical axis, so that malfunction is likely to occur thereby decreasing reliability and making it impossible for the valve to be designed compactly.
Furthermore, the ball valve is made of fluororubber to decrease heat resistance and durability, and making it impossible for the valve to be used oillessly and under high temperature.

### SUMMARY OF THE INVENTION

In view of the disadvantages in the prior art, it is an object of the invention to provide a check valve for a compressor, improving reliability, heat resistance and durability and enabling the valve to be designed compactly and used oillessly.

### BRIEF DESCRIPTION OF THE DRAWINGS:

The features and advantages of the invention will become more apparent from the following description with respect to an embodiment as shown in accompanying drawings below.

Fig. 1 is a vertical sectional view showing an embodiment of a check valve for a compressor according to the present invention.

Fig. 2 is an exploded perspective view thereof.

Fig. 3 is an enlarged sectional view of a valve device.

### DETAILED DESCRIPTION OF PREFERRED EMBODIMENTS

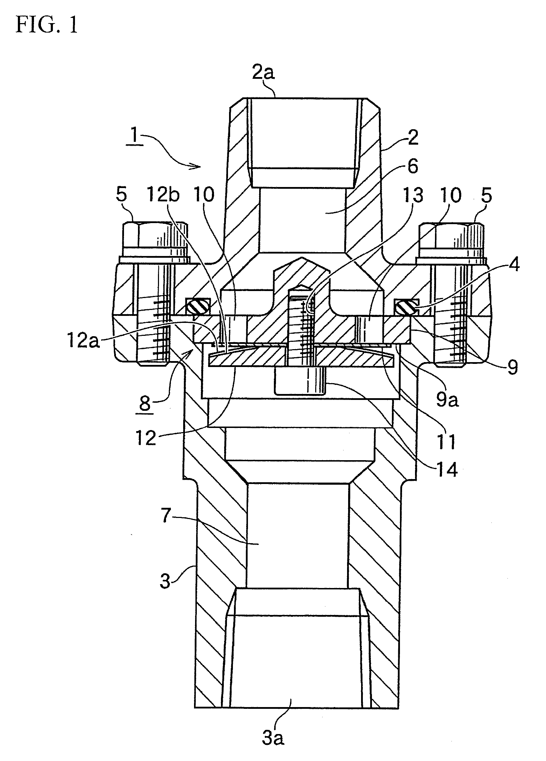

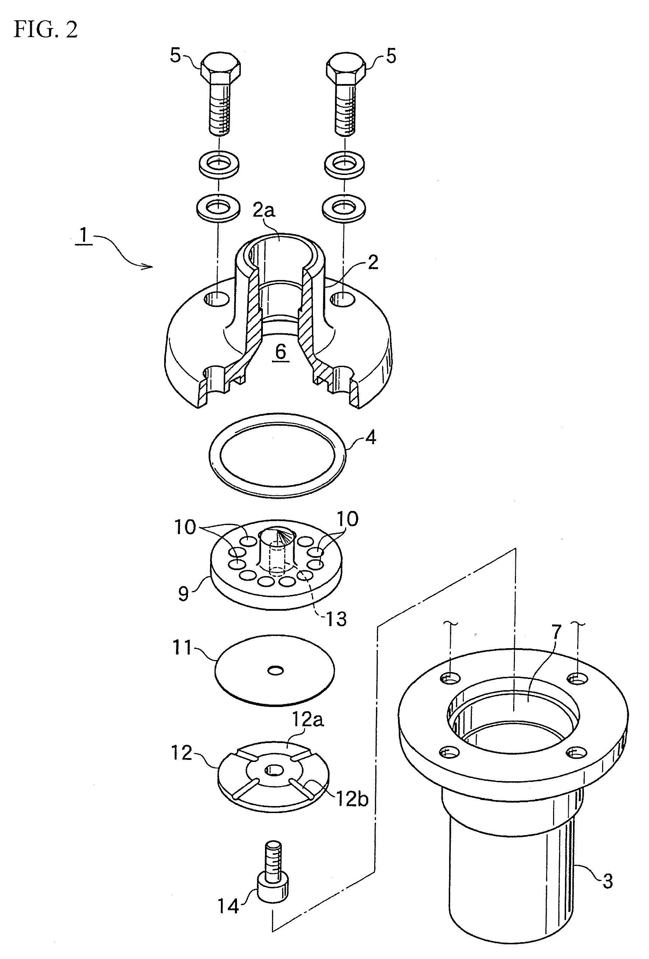

In Figs. 1 and 2, a check valve according to the present invention comprises a cylindrical casing 1.

The cylindrical casing 1 comprises a cylindrical inlet casing 2 having an inlet 2a connected to an outlet of a compressor (not shown) via a conduit; and a cylindrical outlet casing 3 having an outlet 3a connected to a storage tank (not shown) via a conduit, the casings 2 and 3 being coupled to each other with an O-ring 4 and bolts 5.

Compressed air introduced from the compressor via the inlet 2a flows through a flow path 6 in the inlet casing 2 and through a flow path 7 in the outlet casing 3 and is discharged into the storage tank from the outlet 3a.

A valve device 8 is provided between the flow paths 6 and 7. The valve device 8 comprises a valve seat 9 between the inlet casing 2 and the outlet casing 3; a plurality of paths 10 formed through the valve seat 9 from a seat surface 9a; a valve disc 11 which contacts the seat surface 9a facing the outlet 3a and closes the path 10; and a deformation limiting member 12 which presses up the center of the valve disc 11.

The valve disc 11 is made of a circular metal having a thickness of about 0.2-0.203 mm. The deformation limiting member 12 is slightly larger in diameter than the valve disc 10 and made of relatively thick disc-shaped metal.

The valve disc 11 and the deformation limiting member 12 are mounted to the lower surface of the valve seat 9 with a bolt 14 engaging in a bore 13 at the center of the valve seat 9.

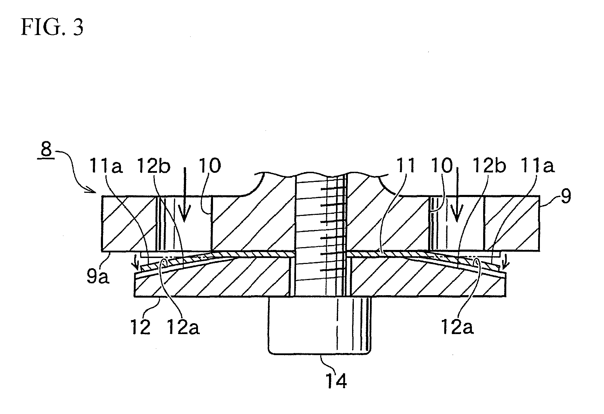

The deformation limiting member 12 has a tilted surface 12a which gradually becomes spaced away from the valve disc 11 radially outward in Fig. 3. The valve disc 11 is pressed at the center toward the seat surface 9a of the valve seat 9 by the deformation limiting member 12.
A plurality of grooves 12b are radially formed in the tilted surface 12a of the deformation limiting member 12. Instead of the grooves 12b, projections may be formed or a plurality of irregularities may be formed by embossing or pivoting.

When a circumference 11 a of the valve disc 11 moves away from the seating surface 9a of the valve seat 9 by pressure of passing compressed air, the tilted surface 12a of the deformation limiting member 12 contacts the circumference 11 a of the valve disc 11 thereby preventing the valve disc 11 from being deformed excessively.

An operation of the check valve according to the present invention will be described.
Compressed air discharged from the compressor is introduced in the flowing path 6 from the inlet 2a of the cylindrical casing 1. By discharge pressure of compressed air, the circumference 11 a of the valve disc 11 of the valve device 8 is deformed away from the seating surface 9a of the valve seat 9 against elastic force of the valve disc 11 to allow each of the paths 10 to open.

The circumference 11 a of the valve disc 11 contacts the tilted surface 12a of the deformation limiting member 12 to limit a gap, thereby preventing the valve disc 11 to be deformed excessively, preventing its life from decreasing and preventing storage efficiency from decreasing owing to bad restoration timing of the valve disc 11.

Compressed air is stored in the storage tank via the path 7 in the cylindrical casing 1 and outlet 12. When pressure in the path 6 is lower than that in the path 7, the deformed valve disc 11 is returned to an original position as shown by a dotted line, so that each of the paths 10 are closed.

A plurality of paths 10 are formed through the valve disc 9 from the seating surface 9a. When compressed air passes through the valve disc 11 from the inlet 2a to the outlet 3a, compressed air flow is choked to increase flow velocity, so that the outlet 3a becomes lower in pressure than the inlet 2a.

Thus, even if pulsation is produced by vibration of the compressed air in the cylindrical casing 1 when air passes through each of the paths 10 of the valve seat 9, the valve disc 11 is kept stationary to tightly contact the tilted surface 12a of the deformation limiting member 12 enabling the valve disc 11 to be kept stably.
Even if the valve disc 11 contacts the tilted surface 12a of the deformation limiting member 12, contacting area is small with the grooves 12b, and the valve disc 11 can be returned by its elastic force so that the valve disc 11 goes away from the tilted surface 12a of the deformation limiting member 12 effectively.

The foregoing merely relates to an embodiment of the invention. Various changes and modifications may be made by a person skilled in the art without departing from the scope of claims.

In summary: A compressed gas is introduced from a compressor into a inlet of a check valve. In a cylindrical casing of the check valve, a valve seat is provided and has a plurality of paths through which compressed gas flows from the inlet to an outlet of the check valve. The paths are opened and closed by a valve disc. A deformation limiting member is provided on the valve disc to limit a gap between the valve disc and the valve seat.

## Claims

1. A check valve for a compressor, comprising:
a cylindrical casing having an inlet connected to the compressor and an outlet through which a
compressed gas introduced from the compressor is discharged;
a valve seat having a plurality of paths through which the inlet communicates with the outlet and a seat surface facing the outlet;
a valve disc that contacts the seat surface of the valve seat;
a deformation limiting member that contacts the valve disc to press the valve disc; and
a bolt that engages in the valve seat, the valve disc and the deformation limiting member at a center.

2. The check valve of claim 1 wherein the deformation limiting member has a tilted surface that faces the valve disc such that the tilted surface is gradually spaced away from the valve disc radially outward.

3. The check valve of claim 2 wherein a plurality of grooves are formed in the tilted surface.
